# EUROPEAN PATENT APPLICATION

(11) **EP 4 737 222 A1**
(43) Date of publication of application: **06.05.2026**
(21) Application number: 24210862.9
(22) Date of filing: 05.11.2024
(51) Int. Cl.: B60R 19/50

(54) **VEHICLE EXTERIOR SYSTEM**

(71) Applicant: ZKW Group GmbH, 3250 Wieselburg (AT)
(72) Inventor: Zeuner, Markus, 3240 Mank (AT)
(74) Representative: Patentanwaltskanzlei Matschnig & Forsthuber OG

(57) **Abstract**

A vehicle exterior system (1) separates an outer area (2) from an inner area (3), the vehicle exterior system comprising a panel (4) and a bumper (7). The panel covers lighting elements (18) and comprises inner (5) and outer panel sides (6). The bumper comprises inner (8) and outer bumper sides (9). A hook- and-loop fastener (12), positioned between the panel and bumper, mechanically fastens them together. A seal member (13) between the panel and bumper seals a path between an outer gap (14) and the fastener. The panel is detachable from the bumper by unfastening the fastener.

## Description

The invention relates to a vehicle exterior system for separating an outer area from an inner area, the vehicle exterior system comprising: a panel designed to cover at least one lighting element, the panel having an inner panel side directed to the inner area and an outer panel side directed to the outer area; a bumper having an inner bumper side directed to the inner area and an outer bumper side directed to the outer area.

In the automotive industry, the assembly of exterior components such as panels and bumpers plays a crucial role in vehicle design and functionality. These components must be securely attached to withstand external forces while allowing easy assembly and disassembly. Traditional means of attaching panels to bumpers involve mechanical fasteners such as screws, clips, and rivets. These means often require significant space and can complicate the assembly process. Additionally, the integration of lighting elements into panels necessitates a secure yet flexible attachment to accommodate various design requirements.

Alternative fasteners such as hook-and-loop fasteners are known from other areas. However, environmental influences such as water, dust and dirt have so far prevented these from being used on the outside of vehicles, as these influences impair the functionality of such fasteners. There is thus a need for a vehicle exterior system that provides a secure and space-efficient connection between panels and bumpers with alternative fasteners to the state of the art. The attachment should also ensure protection of the fastening means while enhancing the structural integrity of the vehicle.

This object is achieved by a vehicle exterior system of the above-mentioned kind, wherein the vehicle exterior system further comprises at least one hooks part and at least one corresponding loops part, forming together at least one hook-and-loop fastener, the hook-and-loop fastener being positioned between the panel and the bumper to mechanically fasten the panel and the bumper together; at least one seal member positioned between the panel and the bumper, wherein the hook-and-loop fastener is attached to the bumper and the panel such that the panel and the bumper overlap in the direction from the inner area to the outer area and such that an outer gap with a defined width is formed in the boundary to the outer area between the bumper and the panel, wherein the seal member is positioned such that a path between the outer gap and the hook-and-loop fastener is sealed, wherein the panel is detachable from the bumper by unfastening the hook-and-loop fastener such that the hooks part is separated from the loops part.

In this context, a "hook- and-loop fastener" can be formed as a generally known hook-and-loop fastener or as a more advanced variant. For example, hook-and-loop fasteners are known under the trademark "Velcro" from the manufacturer Velcro or as further developed versions known under the trademark "Dual Lock" from the manufacturer 3M, which are suitable for heavy-duty applications.

In this context, the term "corresponding" refers to the loops part that is designed to match and engage with the hooks part of the hook-and-loop fastener. The hooks and loops are complementary components that interlock to create a secure fastening mechanism.

The expression "directed to" defines the orientation of a side towards a specific area. It indicates the side's facing direction, which may not directly face the area but is oriented towards it, possibly with intervening elements.

The hook-and-loop fastener may be attached to the inner bumper side and the outer panel side, forming the outer gap in the boundary to the outer area between these sides.

The hook-and-loop fastener can be attached to the bumper and the panel by adhesive tapes.

The hook-and-loop fastener may be attached continuously along the entire perimeter of the panel.

Alternatively, further hook-and-loop fasteners can be distributed at multiple separate positions along the perimeter of the panel.

The seal member can be made from a material selected from the group consisting of foam, EPDM, TP, and silicone.

The seal member may be positioned to completely cover the hook-and-loop fastener.

The panel can comprise at least one opening for at least one sensor element.

The vehicle exterior system may further comprise a securing frame made from metal or rigid plastic, configured to be detachably connected to the panel.

The securing frame is preferably designed to distribute mechanical loads evenly across the panel and bumper.

The panel and the bumper can overlap in the direction from the inner area to the outer area by a distance of 5 to 40 mm.

The outer gap with a defined width may be between 0.5 and 5 mm.

The hook-and-loop fastener is preferably configured to provide a secure attachment that can withstand vehicle vibrations and external forces during operation.

Furthermore, the invention relates to a vehicle comprising such a vehicle exterior system.

The invention is explained in more detail below with reference to exemplary embodiments illustrated in drawings, which show in
Fig. 1 a cross-sectional view of the vehicle exterior system and in
Fig. 2 a front view of the vehicle exterior system.

In the following figures identical reference signs refer to identical features unless expressly depicted otherwise. The reference signs are only for informational purpose and do not limit the scope of protection.

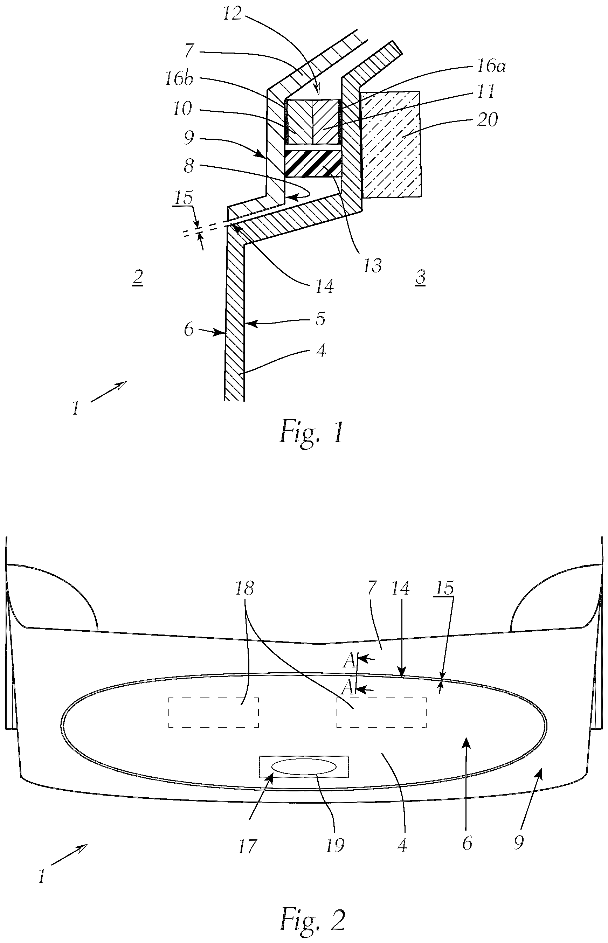

Fig. 1 shows a cross-sectional view of the vehicle exterior system 1 along the A-A line shown in Fig. 2. The vehicle exterior system 1 separates an outer area 2 from an inner area 3 where the inner area may be the space containing other components of a vehicle, while the outer area may be the surrounding environment of the vehicle. The vehicle exterior system 1 includes a panel 4 and a bumper 7, connected by a hook-and-loop fastener 12 and a seal member 13 positioned between the panel 4 and the bumper 7. A securing frame 20 may also be part of the system.

This securing frame 20 is made from metal or rigid plastic and is configured to be detachably connected to the panel 4. The securing frame 20 is designed to distribute mechanical loads evenly across the panel 4 and bumper 7, contributing to the structural integrity of the vehicle exterior system 1. The securing frame 20 does not necessarily have to be a closed frame or an enclosing frame, the essential point is that if the securing frame 20 is provided, it fulfills the described securing function.

The securing frame 20 can play a crucial role in withstanding the dynamic pressure caused by the movement of the vehicle. A forward movement direction of the vehicle could mean a movement of the vehicle in the direction from the inner bumper side 8 to the outer bumper side 9, and from the inner panel side 5 to the outer panel side 6, respectively. Under high speed or high acceleration forces the securing frame 20 ensures that the panel 4 and bumper 7 remain securely attached, even under dynamic conditions. By distributing the mechanical loads, the securing frame 20 helps to prevent deformation or misalignment of the components, thus maintaining the overall functionality and appearance of the vehicle exterior system 1.

The panel 4 is designed to cover at least one lighting element 18 and comprises an inner panel side 5 directed to the inner area 3 and an outer panel side 6 directed to the outer area 2. It serves as a protective covering, ensuring alignment and safeguarding components from external elements. Such a panel 4 typically comprises transparent sections that allow light from the at least one lighting element 18 to pass through. The panel 4 may include at least one opening 17 for sensor elements. Its design allows the attachment of the hook-and-loop fastener 12, facilitating secure and flexible connections with the bumper 7.

The bumper 7 includes an inner bumper side 8 directed to the inner area 3 and an outer bumper side 9 directed to the outer area 2. It provides structural support and protection to the vehicle's exterior. The design of the bumper 7 allows the attachment of the hook-and-loop fastener 12. As shown, the panel 4 and bumper 7 overlap in the direction from the inner area 3 to the outer area 2.

The hook-and-loop fastener 12 comprises at least one hooks part 10 and at least one corresponding loops part 11, positioned between the panel 4 and the bumper 7 to mechanically fasten them together. This fastener provides a secure yet flexible attachment, allowing easy assembly and disassembly. It is configured to withstand vehicle vibrations and external forces during operation, ensuring the structural integrity of the connection. This configuration forms an outer gap 14 with a defined width 15 in the boundary to the outer area 2 between the bumper 7 and the panel 4. The defined width 15 of the outer gap 14 ensures precise alignment and spacing, accommodating design requirements and enhancing the aesthetic appearance of the vehicle exterior system 1.

The seal member 13 is positioned between the panel 4 and the bumper 7, ensuring that a path between the outer gap 14 and the hook-and-loop fastener 12 is sealed. This path may refer to any potential route through which water, dust, or debris could travel from the outer gap 14 to the fastener 12. Preferably this path is the closest path from the hook-and-loop fastener 12 to the outer gap 14. The seal member 13 prevents contaminants from reaching the hook-and-loop fastener 12, thereby maintaining its functionality and longevity.

The seal member 13 may be made from materials such as foam, EPDM ethylene-propylene diene monomer, TP thermoplastic polyurethanes, or silicone, providing durability and resistance to environmental influences.

The hook-and-loop fastener 12 may be attached to the bumper 7 and the panel 4 using adhesive tapes 16a and 16b.

The hook-and-loop fastener 12 can be attached to the inner bumper side 8 and the outer panel side 6, forming the outer gap 14 in the boundary to the outer area 2 between the inner bumper side 8 and the outer panel side 6.

The seal member 13 can be positioned to completely cover the hook-and-loop fastener 12 to further improve protection from contamination.

The panel 4 and bumper 7 may overlap in the direction from the inner area 3 to the outer area 2 by a distance of 5 - 40 mm.

Fig. 2 shows a front view of the vehicle exterior system 1. The panel 4 is designed to cover lighting elements 18 and can comprise at least one opening 17 for at least one sensor element 19, as shown in this view.

The hook-and-loop fastener 12 can be attached continuously along the entire perimeter of the panel 4, providing a secure attachment. Alternatively, several hook-and-loop fasteners 12 can be distributed at multiple separate positions along the perimeter of the panel 4 and at related positions at the bumper 7, offering flexibility in design and assembly. The perimeter refers to the area near the edge of panel 4.

The outer gap 14 with a defined width 15 can be between 0.5 and 5 mm, ensuring precise alignment and accommodating design requirements. This defined width 15 contributes to the overall functionality and appearance of the vehicle exterior system 1.

The invention is not limited to the embodiments shown but is defined by the entire scope of protection of the claims. Individual aspects of the invention or of the embodiments can also be taken up and combined with one another. Any reference signs in the claims are exemplary and serve only the purpose to allow easier review without restricting the claims.

## Claims

1. A vehicle exterior system (1) for separating an outer area (2) from an inner area (3), the vehicle exterior system (1) comprising:
a panel (4) designed to cover at least one lighting element (18), the panel (4) having an inner panel side (5) directed to the inner area (3) and an outer panel side (6) directed to the outer area (2);
a bumper (7) having an inner bumper side (8) directed to the inner area (3) and an outer bumper side (9) directed to the outer area (2);
**characterized in that** the vehicle exterior system (1) further comprises:
at least one hooks part (10) and at least one corresponding loops part (11), forming together at least one hook-and-loop fastener (12), the hook-and-loop fastener (12) being positioned between the panel (4) and the bumper (7) to mechanically fasten the panel (4) and the bumper (7) together;
at least one seal member (13) positioned between the panel (4) and the bumper (7),
wherein the hook-and-loop fastener (12) is attached to the bumper (7) and the panel (4) such that the panel (4) and the bumper (7) overlap in the direction from the inner area (3) to the outer area (2) and such that an outer gap (14) with a defined width (15) is formed in the boundary to the outer area (2) between the bumper (7) and the panel (4),
wherein the seal member (13) is positioned such that a path between the outer gap (14) and the hook-and-loop fastener (12) is sealed,
wherein the panel (4) is detachable from the bumper (7) by unfastening the hook-and-loop fastener (12) such that the hooks part (10 is separated from the loops part (11).

2. Vehicle exterior system (1) according to claim 1 wherein the hook-and-loop fastener (12) is attached to the inner bumper side (8) and the outer panel side (6) such that the outer gap (14) is formed in the boundary to the outer area (2) between the inner bumper side (8) and the outer panel side (6).

3. Vehicle exterior system (1) according to any of the claims 1 to 2, wherein the hook-and-loop fastener (12) is attached to the bumper (7) and the panel (4) by adhesive tapes (16a, 16b).

4. Vehicle exterior system (1) according to any of the claims 1 to 3, wherein the hook-and-loop fastener (12) is attached continuously along the entire perimeter of the panel (4).

5. Vehicle exterior system (1) according to any of the claims 1 to 3, wherein further hook-and-loop fasteners (12) are distributed at multiple separate positions along the perimeter of the panel (4).

6. Vehicle exterior system (1) according to any of the claims 1 to 5, wherein the seal member (13) is made from a material selected from the group consisting of foam, EPDM, TP, and silicone.

7. Vehicle exterior system (1) according to any of the claims 1 to 6, wherein the seal member (13) is positioned to completely cover the hook-and-loop fastener (12).

8. Vehicle exterior system (1) according to any of the claims 1 to 7, wherein the panel (4) comprises at least one opening (17) for at least one sensor element (19).

9. Vehicle exterior system (1) according to any of the claims 1 to 8, further comprising a securing frame (20) made from metal or rigid plastic, configured to be detachably connected to the panel (4).

10. Vehicle exterior system (1) according to claim 9, wherein the securing frame (20) is designed to distribute mechanical loads evenly across the panel (4) and bumper (7).

11. Vehicle exterior system (1) according to any of the claims 1 to 10, wherein the panel (4) and the bumper (7) overlap in the direction from the inner area (3) to the outer area (2) by a distance of 5 to 40 mm.

12. Vehicle exterior system (1) according to claim 1, wherein the outer gap (14) with a defined width (15) is between 0.5 and 5 mm.

13. Vehicle exterior system (1) according to claim 1, wherein the hook-and-loop fastener (12) is configured to provide a secure attachment that can withstand vehicle vibrations and external forces during operation.

14. Vehicle comprising a vehicle exterior system (1) according to any of the claims 1 to 13.
